(19) Europäisches Patentamt
European Patent Office
Office européen des brevets

(11) **EP 1 998 463 A1**

(12) **EUROPEAN PATENT APPLICATION**

(43) Date of publication:
**03.12.2008 Bulletin 2008/49**

(51) Int Cl.:
*H04B 3/32* (2006.01)    *H04B 3/46* (2006.01)

(21) Application number: **07010644.8**

(22) Date of filing: **29.05.2007**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK RS**

(71) Applicant: **Nokia Siemens Networks Oy**
**02610 Espoo (FI)**

(72) Inventor: **Ahrndt, Thomas Dr.**
**85521 Ottobrunn (DE)**

(74) Representative: **Bruglachner, Thomas E.**
**Nokia Siemens Network GmbH & Co. KG**
**Patentabteilung**
**Postfach 80 17 60**
**81541 München (DE)**

(54) **Method and device for evaluating crosstalk and communication system comprising such device**

(57) A method and a device are provided for evaluating crosstalk between at least two lines comprising a manipulation of at least one of the at least two lines.

# FIG 2

EP 1 998 463 A1

## Description

The invention relates to a method and a device for evaluating crosstalk and a communication system comprising such a device.

DSL or xDSL, is a family of technologies that provide digital data transmission over the wires of a local telephone network.

Asymmetric Digital Subscriber Line (ADSL) is a form of DSL, a data communications technology that enables faster data transmission over copper telephone lines than a conventional voice band modem can provide. Such fast transmission is achieved by utilizing frequencies that are normally not used by a voice telephone call, in particular, frequencies higher than normal human hearing.

VDSL (Very High Speed DSL) is an xDSL technology providing faster data transmission over a single twisted pair of wires. High bit rates are achieved at a range of about 300 meters (1000 ft), which allows for 26 Mbit/s with symmetric access or up to 52Mbit/s in downstream - 12Mbit/s in upstream with asymmetric access.

Currently, standard VDSL uses up to 4 different frequency bands, two for upstream (from the client to the telecom provider) and two for downstream. Suitable modulation techniques are QAM (quadrature amplitude modulation) or DMT (discrete multitone modulation).

According to its high bandwidth, VDSL is capable of supporting applications like HDTV, as well as telephone services (e.g., Voice over IP) and general Internet access, over a single connection.

VDSL2 (Very High Speed Digital Subscriber Line 2) is an access technology that exploits the existing infrastructure of copper wires that were originally used for plain old telephone service (POTS). It can be deployed from central offices, from fiber-fed cabinets preferably located near the customer premises, or within buildings.

VDSL2 is designed to support the wide deployment of Triple Play services such as voice, video, data, high definition television (HDTV) and interactive gaming. VDSL2 enables operators and carriers to gradually, flexibly, and cost efficiently upgrade existing xDSL infrastructure.

ITU-T G.993.2 (VDSL2) is an enhancement to G.993.1 (VDSL) that permits the transmission of asymmetric and symmetric (full duplex) aggregate data rates up to 200Mbit/s on twisted pairs using a bandwidth up to 30MHz.

Standards for digital subscriber line transmission such as ADSL, HDSL, VDSL, ADSL2/ADSL2+ or VDSL2 predominantly follow a traditional "leased line philosophy" according to which after an initial synchronization procedure a high bit rate connection is running 24 hours a day independent whether there is payload demand by the user or not.

A packet data of an all-IP service, e.g., WWW access, VoIP, IPTV, FTP, or the like, is encapsulated into a constant bit rate service. A mechanism for rate adaptation in ADSL2 is slow and based on complicated negotiations between both sides.

A DSL binder can consist of up to 100 subscriber lines bundled together. Because of their close proximity, the lines create electromagnetic interference into each other leading crosstalk noise or disturbance.

Near-end crosstalk (NEXT) refers to crosstalk created by transmitters located on the same side as the receiver. Far- end crosstalk (FEXT) refers to crosstalk created by transmitters located on the opposite end of the line.

In [1] dynamic spectrum management for digital subscriber lines is described. According to [1], crosstalk is one of the main limitations of DSL performance. Static Spectrum Management (fixed spectral masks) ensures that DSL lines in the same cable are spectrally compatible under worst-case crosstalk assumptions. Dynamic Spectrum Management (DSM) increases capacity utilization by adapting the transmit spectra of DSL lines to the actual time-variable crosstalk interference.

It is an **object** of the approach presented herewith to assess crosstalk in existing xDSL communication systems in particular to efficiently reconfigure an xDSL communication system according to changing prerequisites.

This problem is solved according to the features of the independent claims. Further embodiments result from the depending claims.

In order to overcome this problem a method is provided for evaluating crosstalk between at least two lines comprising a manipulation of at least one of the at least two lines.

This advantageously allows to, e.g., select a particular line out of several lines and manipulate a signal to be conveyed via this line. According to this signal, a crosstalk effect starting from this manipulation can be evaluated. Advantageously, such manipulation can be performed on a line that carries data signals and/or on an idle line. It is further an advantage that based on such manipulation a crosstalk (or even no crosstalk) may be determined starting from a particular line influencing a number of lines within a multi-core cable. In doing so for, e.g., all lines of the multi-core cable, an overall cross-talk may be evaluated.

It is an embodiment that a result of the manipulation of the at least one of the at least two lines is measured.

In a further embodiment, based on the result of the manipulation, a bit allocation is adapted.

Hence, a bit allocation to be conveyed via the at least one line of the at least two lines can be adapted in order to efficiently manipulate crosstalk or even in order to minimize crosstalk effects.

It is also an embodiment that the bit allocation is adapted by bitswapping, in particular according to a bitswapping protocol.

Bitswapping may be realized by checking the influence of a particular frequency range within the spectrum and its impact on crosstalk. Single bits or symbols may be shifted to another frequency range in order to obtain a better (reduced) overall crosstalk. For example, shifting particular bits of symbols on a particular line from one band (spectrum) to another may improve the signal-to-noise ratio (SNR).

It is also an embodiment that the bit allocation is adapted according to a carrier shaping mask.

The carrier shaping mask allows to adjust a spectrum according to a predefined shape or form. This shape can be used for modulation purposes. Advantageously, such adapted shape allows to adjust and hence to reduce the crosstalk effects.

In a further embodiment, the bit allocation can be adapted according to a power density shaping mask.

Such power density shaping mask can also be used to efficiently adapt the crosstalk of one line to other lines of a multi-core cable.

In yet another embodiment, the bit allocation is performed in a downstream direction. The bit allocation can preferably be performed by a central office (CO) and/or a digital subscriber line access multiplexer (DSLAM).

According to an embodiment, the bit allocation is used for online reconfiguration purposes of a connection. Such reconfiguration can preferably be performed after an initial training phase, in particular after a calibration phase of the connection.

In a next embodiment, the bit allocation is adapted by a protocol that is run via an overhead channel. Such protocol may preferably run on one side between a central office (CO) and/or a digital subscriber line access multiplexer (DSLAM) and a customer-premises equipment (CPE) on the other side.

Reference is made to ITU-T Recommendation G.993.2, "Very high speed digital subscriber line transceivers 2", referring in particular to an overhead channel.

It is also an embodiment that a digital subscriber line (xDSL) communication is run via the at least one line, in particular between the at least two lines.

In a further embodiment, the digital subscriber line communication can be of the following type:

- Asymmetric Digital Subscriber Line ADSL, ADSL2, ADDSL2+;
- High Data Rate Digital Subscriber Line HDSL;
- Very High Speed Digital Subscriber Line VDSL, VDSL2.

In yet a further embodiment, the at least one line connects a customer-premises equipment (CPE) with a central office (CO) and/or with a digital subscriber line access multiplexer (DSLAM).

In a embodiment, the manipulation of at least one of the at least two lines comprises the step:

- modems and/or terminals at the user are switched on and/or off.

In a next embodiment, the manipulation of at least one of the at least two lines comprises the step:

- modems and/or terminals at the user are switched on and/or off by an instance of the network.

The instance of the network can be a digital subscriber line access multiplexer (DSLAM) or a central office (CO)

Such on/off-switching allows to produce a certain crosstalk to at least one other lines of a multi-core cable. This effect may be evaluated and hence be used in order to minimize the overall crosstalk.

In another embodiment, the manipulation of at least one of the at least two lines comprises the step:

- Signals are generated and transmitted via at least one line that currently carries data and/or for which currently no connection is set up, said signals comprise a modulation in a time and/or in a frequency domain.

Various signals of different modulation can be applied to one line that may even carry information. The impact of crosstalk by applying such signal(s) can be assessed by comparing (measuring) interferences with and without such manipulation applied. This difference allows to assess as how to compensate crosstalk.

In yet another embodiment, the manipulation of at least one of the at least two lines comprises the steps:

- Transmitting predefined information data via the at least one of the at least two lines;
- Measuring crosstalk of the predefined information to at least one other line.

In a further embodiment, the manipulation of at least one of the at least two lines comprises the step:

- Modifying the transmission spectrum by shaping a power spectral density thereof.

It is in particular possible to shape the power spectral density during a transmission of data.

In yet a further embodiment, the manipulation of at least one of the at least two lines comprises the step:

- Modulation of at least one symbol of a quadrature amplitude modulation by multiple on/off-switching and/or by amplitude jumping and/or by phase jumping.

In a embodiment, the manipulation of at least one of the at least two lines is performed in order to determine the crosstalk to at least one of the respective other line(s) remaining.

The problem stated before is also solved by a device for evaluating crosstalk comprising a processor unit that is arranged and/or equipped such that the method as described herein is executable on said processor unit.

In an embodiment, said device is a communication device, in particular a one of the following:

- a customer-premises equipment (CPE);
- a central office (CO) or a device located in or near the central office; and
- a digital subscriber line access multiplexer (DSLAM).

In another embodiment, said device compensates at least a portion of the crosstalk.

The problem is further solved by a communication system comprising the device as described herein.

Embodiments of the invention are shown and illustrated in the following figures:

Fig.1 shows an example of a multi-core cable with binders and starquads;

Fig.2 shows a scenario comprising a communication network allowing to send data from a server to a client in particular via an xDSL connection.

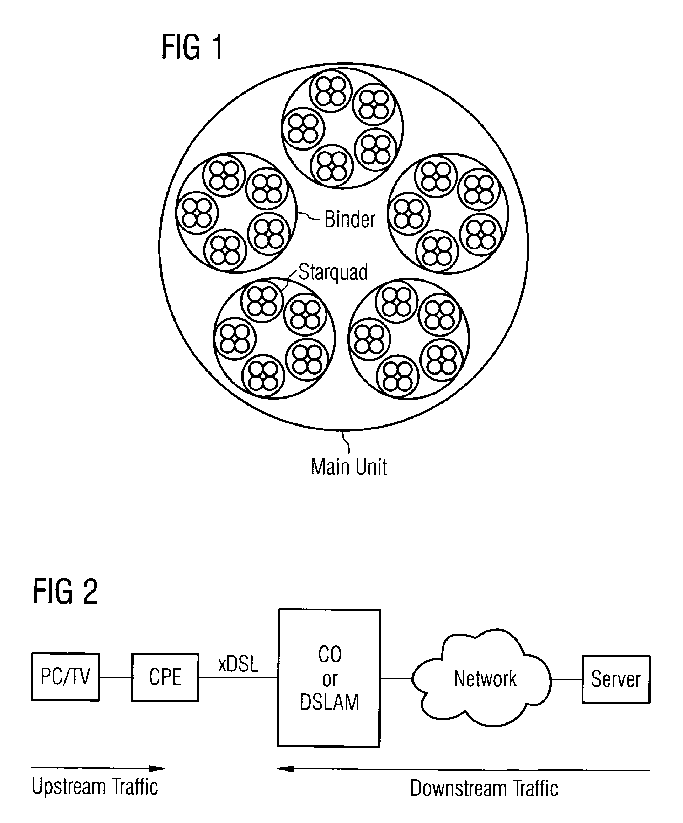

**Fig.1** shows a multi-core cable comprising a Main Unit with five binders, wherein each Binder further comprises five Starquads. Hence, the structure according to Fig.1 shows 100 single lines that are arranged within the Main Unit.

Sending a signal via one line leads to crosstalk on the other lines. However, the effect of such crosstalk depends, e.g., on the frequencies, on the signal strength, on the geometry of the cable (distance to the next disturbance), etc. In this regard, a single line within a starquad may experience more disturbance from another (used) line within the same starquad than from a line outside its binder.

However, usually an operator conveying information via one or several lines of the Main Unit does not know which lines will be allocated, nor does the operator in advance know the disturbances these lines experience from one another and from other lines of the Main Unit (or other Main Unit).

It is to be noted that other disturbances may apply as well, in particular from outside of the Main Unit.

Thus, the operator has to use the lines allocated to convey information from a server to the customer. A particular scenario of a communication network is shown in Fig.2. Downstream Traffic is conveyed from the Server via a Network to a Central Office or a Digital Subscriber Line Access Multiplexer CO/DSLAM. The CO/DSLAM is further connected via a digital subscriber line xDSL to a Customer-Premises Equipment CPE. The digital subscriber line connection can be in particular of the following type:

- Asymmetric Digital Subscriber Line ADSL, ADSL2, ADDSL2+;
- High Data Rate Digital Subscriber Line HDSL;
- Very High Speed Digital Subscriber Line VDSL, VDSL2.

The customer can be connected to the Customer-Premises Equipment CPE via a set-top box and a television or via a personal computer PC/TV. Data that is sent from the PC/TV towards the Server is referred to as Upstream Traffic.

Preferably, an operator or provider wants to efficiently use the xDSL downstream direction from the CO/DSLAM to the CPE by employing high data rate with low crosstalk effects.

As the provider or operator at the CO/DSLAM usually is unaware which of the physical lines within a Main Unit (as shown in Fig.1) are used for xDSL traffic, he advantageously manipulates the lines in order to evaluate the crosstalk and hence to be able to reduce or to minimize it.

Preferably, the CO/DSLAM is used to coordinate such manipulation of the lines. Hence, the bit allocation within the downstream traffic shall be provided by the CO/DSLAM. Such bit allocation can be adapted by the CO/DSLAM dynamically reflecting the present condition of the multi-core cable or Main Unit of Fig.1.

In a particular embodiment, the CPE selects a maximum number N of bits to be used per (sub)carrier or frequency in downstream direction. According to this predefined value, the CO/DSLAM determines an effective number n of bits used per (sub)carrier or frequency with

$$0 \leq n \leq N.$$

Hence, according to an approach presented herewith, a protocol can be administered that may be preferably defined to be run within an Overhead-Channel comprising the following functionalities:

a) According to a bitswap-protocol, bit allocation can be configured in downstream direction as set forth by the CO/DSLAM;

b) An online-reconfiguration can be performed in particular after an initial training phase (calibration of the different xDSL connections) by setting at least one carrier mask in upstream and/or in downstream direction. A carrier mask may reflect the spectrum of (sub)carriers to be used, wherein certain ranges may be adjusted to reflect a reduced crosstalk over the lines. As an example, particular lines of a multi-core cable used by a provider or operator may be particularly susceptible to disturbances in a certain frequency range. Hence, the carrier mask may be adjusted for those lines, e.g., by reducing transmission over such carrier frequencies that are very susceptible to disturbances. As the disturbances are caused by the operator or provider, it is possible to evaluate the effect of these disturbances to all lines (and all carrier frequencies) on those lines and thus optimize the spectrum accordingly.

c) An online-reconfiguration can be performed in particular after an initial training phase (calibration of the different xDSL connection) by setting a power spectral density (PSD) mask. This is similar to the proceedings described under b), but instead of the carriers the power spectrum is evaluated and tuned.

An advantage of this approach is that reconfiguration of several lines running xDSL can be performed during operation of the systems and/or services and in particular after an initial calibration. This allows an adjustment to crosstalk in particular during runtime of a communication system and does not require the system to be shut down and to be recalibrated again. It is even possible to superimpose the manipulation to an existing data line and to assess the effect and hence tune the transmission (to improve the overall transmitting capability by reducing an overall crosstalk).

However, there exist a number of possibilities to manipulate the signal over at least one line and upon such manipulation receive a result (to be, e.g., measured) that shows the impact of such manipulation over an existing channel. Hence, a crosstalk effect initiated by, e.g., manipulation of a single line can be determined (as the manipulation itself is known the change resulting to such manipulation can be determined). As a subsequent step, the result received upon manipulation of the at least one line can be used for inverse algorithms to generate a signal that is insensitive to such manipulation and may hence increase the overall transmitting capability of the system.

Examples to evaluate crosstalk between lines, in particular between copper wires, are as follows:

(1) At least a modems and/or a terminal at a user is switched on and off in particular by the CO/DSLAM (central office or digital subscriber line access multiplexer).
Such temporary deactivation of a CPE allows the operator to measure disturbances or crosstalk over a line that preferably should carry no data at all.

(2) Signals are generated and transmitted via at least one line that may also carry user data. Such signals may be modulated in a time and/or in a frequency domain.
Such modulated signals can be conveyed via an already used line or via a line that is currently not used by a xDSL connection. In both cases, the superimposed signals allow to measure an crosstalk effect to those lines that are nearby and get disturbed by the signals applied. It is also possible to measure the disturbance in view of a frequency when modulating the manipulation signal and measuring the crosstalk impact to at least one other line of the multi-core cable.

(3) Information data can be transmitted via the xDSL connection thereby altering the transmission signal. Such alteration can be used to detect the crosstalk impact to adjacent lines.

(4) The transmission spectrum can be altered according to a predefined shaping of the power spectral density (PSD).
This can be done during operation of the respective xDSL line. In case connection errors occur, such errors could be tolerated and corrected by internal error correction mechanisms of the xDSL system. In addition, frequency ranges that are subject to such errors could be excluded by bitswapping, i.e. transferring the bits to be conveyed within the range to be excluded to another frequency range that is operative and preferably is insensitive to disturbances and/or does not disturb adjacent lines to the extent of the previous frequency range.
It is also possible to increase the modulation stage with regard to a frequency range that is a destination range of a bitswapping algorithm (e.g., from 4QAM to 64QAM).

(5) As stated in (4), but instead of shaping the power spectral density, the modulation signal, e.g., QAM signal, is modulated by switching it on and off and/or by amplitude and/or by phase jumping.
These measures described can be applied to one or more lines of a line bundle (of a multi-core cable) in order to determine crosstalk effects regarding to at least one of the other lines. These effects can be measured in the time and/or the frequency domain.

**Referenee(s):**

[1] J. Verlinden, T. Bostoen, G. Ysebaert: Technology White Paper: Dynamic Spectrum Management for Digital Subscriber Lines - Edition 2, Alcatel, 6/2005

**Claims**

1. A method for evaluation of crosstalk between at least two lines comprising a manipulation of at least one of the at least two lines.

2. The method according to claim 1, wherein a result of the manipulation of at least one of the at least two lines is measured.

3. The method according to claim 2, wherein based on the result of the manipulation a bit allocation is adapted.

4. The method according to claim 3, wherein the bit allocation is adapted by bitswapping in particular according to a bitswap protocol.

5. The method according to any of claims 3 or 4, wherein the bit allocation is adapted according to a carrier shaping mask.

6. The method according to any of claims 3 to 5, wherein the bit allocation is adapted according to a power spectrum density shaping mask.

7. The method according to any of claims 3 to 6, wherein the bit allocation is done in a downstream direction.

8. The method according to any of claims 3 to 7, wherein the bit allocation is used for online reconfiguration purposes of a connection.

9. The method according to any of claims 3 to 8, wherein the bit allocation is adapted by protocol run via an overhead channel.

10. The method according to any of the preceding claims, wherein a digital subscriber line (xDSL) communication is run via the at least one line.

11. The method according to claim 10, wherein the digital subscriber line communication can be of the following type:

    - Asymmetric Digital Subscriber Line ADSL, ADSL2, ADDSL2+;
    - High Data Rate Digital Subscriber Line HDSL;
    - Very High Speed Digital Subscriber Line VDSL, VDSL2.

12. The method according to any of the preceding claims, wherein the at least one line connects a customer-premises equipment (CPE) and a central office (CO) and/or a digital subscriber line access multiplexer (DSLAM).

13. The method according to any of the preceding claims, wherein the manipulation of at least one of the at least two lines comprises the step:

    - modems and/or terminals at the user are switched on and/or off.

14. The method according to any of the preceding claims, wherein the manipulation of at least one of the at least two lines comprises the step:

    - modems and/or terminals at the user are switched on and/or off by an instance of the network.

15. The method according to claim 14, wherein the instance of the network is a digital subscriber line access multiplexer (DSLAM) or a central office (CO)

16. The method according to any of the preceding claims, wherein the manipulation of at least one of the at least two lines comprises the step:

    - Signals are generated and transmitted via at least one line that currently does provide other user data and/or for which currently no connection is set up, said signals comprises a modulation in a time and/or in a frequency domain.

17. The method according to any of the preceding claims, wherein the manipulation of at least one of the at least two lines comprises the steps:

    - Transmitting predefined information data via the at least one of the at least two lines;
    - Measuring the effect of the predefined information to at least one other line.

18. The method according to any of the preceding claims, wherein the manipulation of at least one of the at least two lines comprises the step:

    - Modifying the transmission spectrum by shaping a power spectral density thereof during the transmission of signals.

19. The method according to any of the preceding claims, wherein the manipulation of at least one of the at least two lines comprises the step:

    - Modulation of at least one symbol of a quadrature amplitude modulation by multiple on/off-switching or by amplitude jumping or by phase jumping.

20. The method according to any of the preceding claims, wherein the manipulation of at least one of the at least two lines is performed in order to determine the crosstalk to at least one of the respective other line(s) remaining.

21. A device for evaluation of crosstalk comprising a processor unit that is arranged such that the method according of any of the preceding claims is executable on said processor.

**22.** The device according to claim 21, wherein said device is a communication device, in particular a one of the following:

   - a customer-premises equipment (CPE);
   - a central office (CO) or a device located in or near the central office; and
   - a digital subscriber line access multiplexer (DSLAM).

**23.** The device according to any of the claims 21 or 22, wherein said device compensates at least a portion of the crosstalk.

**24.** Communication system comprising the device according to any of claims 21 to 23.

## FIG 1

## FIG 2

**European Patent Office**

**EUROPEAN SEARCH REPORT**

Application Number

EP 07 01 0644

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2007/036339 A1 (CIOFFI JOHN M [US] ET AL) 15 February 2007 (2007-02-15)<br>* the whole document *<br>----- | 1-24 | INV.<br>H04B3/32<br>H04B3/46 |
| X | US 6 985 521 B1 (REZVANI BEHROOZ [US] ET AL) 10 January 2006 (2006-01-10)<br><br>* column 7, line 65 - column 8, line 9 *<br>* column 9, line 6 - line 42 *<br>----- | 1,2, 10-12, 16,20-24 | |

TECHNICAL FIELDS
SEARCHED (IPC)

H04B
H04M

The present search report has been drawn up for all claims

| Place of search | Date of completion of the search | Examiner |
|---|---|---|
| Munich | 5 November 2007 | Giglietto, Massimo |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

........................................................................................
& : member of the same patent family, corresponding
document

## ANNEX TO THE EUROPEAN SEARCH REPORT
## ON EUROPEAN PATENT APPLICATION NO.

EP 07 01 0644

This annex lists the patent family members relating to the patent documents cited in the above-mentioned European search report.
The members are as contained in the European Patent Office EDP file on
The European Patent Office is in no way liable for these particulars which are merely given for the purpose of information.

05-11-2007

| Patent document cited in search report | | Publication date | Patent family member(s) | | Publication date |
|---|---|---|---|---|---|
| US 2007036339 | A1 | 15-02-2007 | WO | 2006129145 A2 | 07-12-2006 |
| US 6985521 | B1 | 10-01-2006 | NONE | | |

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **J. VERLINDEN ; T. BOSTOEN ; G. YSEBAERT.** Technology White Paper: Dynamic Spectrum Management for Digital Subscriber Lines. Alcatel, June 2005